# EUROPEAN PATENT SPECIFICATION

(11) **EP 0 549 076 B1**
(45) Date of publication and mention of the grant of the patent: **13.09.1995**
(21) Application number: 92204052.2
(22) Date of filing: 21.12.1992
(51) Int. Cl.: C09J 4/06

(54) **Acrylic-based structural adhesives**
Strukturklebstoffe auf der Basis von Acrylaten
Adhésifs de structure à base d'acrylates

(30) Priority: 23.12.1991 IT MI913474
(43) Date of publication of application: 30.06.1993
(73) Proprietor: MINISTERO DELL' UNIVERSITA' E DELLA RICERCA SCIENTIFICA E TECNOLOGICA, 00196 Roma (IT)
(72) Inventor: Di Ruocco, Vittorio, I-28100 Novara (IT); Braghieri, Giuseppe, F-28100 Novara (IT); Garbassi, Fabio, I-28100 Novara (IT)
(74) Representative: Fusina, Gerolamo

(56) References cited:
- EP-A- 0 251 513
- EP-A- 0 414 030
- DE-A- 1 909 992
- FR-A- 2 193 863
- US-A- 3 203 941
- PATENT ABSTRACTS OF JAPAN vol. 7, no. 139 (C-171)(1284) 17 June 1983

## Description

This invention relates to acrylic-based structural adhesives. More particularly, the invention relates to bicomponent acrylic-based structural adhesives, with added carbon microfibres.

Acrylic-based structural adhesives are known in the art. They are described for example in USA patents 3,591,438, 3,594,451, 3,642,750, 3,203,941 and 3,890,407.

Specifically, USA patent 3,890,407 describes adhesive compositions in which the critical components are essentially an elastomeric polymer based on chlorosulphonated polyethylene or a mixture of sulphonyl chloride and chlorinated polyethylene, a vinyl monomer, a polymerization catalyst consisting of a free radical generator, a polymerization initiator, an adhesion promoter and an adhesive activating component (catalyst).

These adhesive compositions show good characteristics in terms of bonding force, low fragility, very short setting time, good impact strength, ability to achieve strong joints even with poorly cleaned surfaces, and high tenacity after cross-linking.

The use of structural adhesives has substantially increased in recent years especially in the aerospace and automobile fields, with the consequent development of high-performance adhesive compositions which enable ever-increasing stresses to be withstood.

The applicant has now discovered a new class of bicomponent acrylic adhesives in which carbon microfibres of good wettability in an acrylic environment and hence perfectly compatible with the adhesive constituents are used, to provide high adhesive capacity even under drastic conditions.

The present invention therefore provides acrylic-based bicomponent structural adhesives comprising:
a) a first adhesive component consisting of a solution of an elastomer in a monofunctional acrylic monomer containing a free radical generator, a solution stabilizer, an adhesion promoter, and a cross-linking agent,:
b) a second component activating the first adhesive component and consisting of a mixture of aldehyde-amine condensation products in which an organic salt of a metal of the first transition series of low oxidation state is dissolved, characterised in that the component a) further contains a carbon microfibre-based reinforcing additive in a quantity of 1 to 6 phr per 100 g of the adhesive paste.

Phr is an acronym indicating part per 100 part of resin.

Preferred carbon microfibres according to the invention are those in which the fibres have a length L of between 100 and 1000 micrometres and a diameter D of between 5 and 8 micrometres, so that L/D is between 12.5 and 200.

Particularly preferred are those fibres in which L/D is between 140 and 150.

Examples of acrylic monomers usable for forming the adhesives of the present invention are: methyl methacrylate, ethyl methacrylate, acrylonitrile, methacrylonitrile, methyl acrylate, ethyl acrylate, butyl methacrylate, cyclohexyl methacrylate, hexyl methacrylate, lauryl methacrylate, butyl acrylate, cyclohexyl acrylate, hexyl acrylate. lauryl acrylate, acrylamide and methacrylamide.

The preferred monomers are methyl methacrylate, ethyl methacrylate and cyclohexyl methacrylate.

The elastomer used in the adhesives of the present invention is preferably a chlorosulphonated polymer chosen from chlorosulphonated polyolefins.

The preferred elastomer is chlorosulphonated polyethylene, although chlorosulphonated copolymers of ethylene with small quantities of propvlene or other olefins can be used.

Chlorosulphonated polyethylene is obtained by known methods, by reacting linear or branched polyethylene with sulphuryl chloride or with SO₂ and chlorine. It is produced by Du Pont and marketed under the name of Hypalon.

Alternatively, the chlorosulphonated polymers used can be mixtures of sulphonyl chlorides with chlorinated polyethylene or chlorosulphonated polyethylene.

The sulphonyl chlorides can be chosen from alkyl sulphonyl chlorides containing from 1 to 12 carbon atoms such as methane or butane sulphonyl chloride, aryl sulphonyl chlorides containing from 6 to 24 carbon atoms such as benzene or toluene sulphonyl chloride, and sulphonyl chlorides containing hetero atoms such as diphenylether-4,4'-disulphonyl chloride.

The chlorosulphonated polymer is added to the acrylic monomer in a quantity which can vary within wide limits, although it is preferable to use a quantity of between 25 and 40 wt% on the total component a).

As an alternative to the chlorosulphonated polymer alone, mixtures thereof with other natural or synthetic elastomers soluble in the acrylic monomer can be used such as polybutadiene, butadiene/acrylonitrile copolymers, elastomeric polyacrylates, polyisoprene, polychloroprene, polyurethane elastomers, fluorinated elastomers etc.

A solution stabilizer is added to the resultant mixture in a quantity of between 0.1 and 2 wt% on the total of a), it being chosen from quinones and hydroquinones such as dihydroquinone, dihydroquinone monomethyl ether, anthraquinone, di-tert-butyl-para-cresol etc.

The preferred stabilizer is di-tert-butyl-para-cresol. Adhesion promoters chosen from unsaturated mono and dicarboxylic acids are added to the monofunctional acrylic monomer solution in a quantity of between 5 and 35 wt% on the total of a).

The preferred promoter is methacrylic acid.

A further additive of the first adhesive component is the cross-linking agent, chosen for example from acrylic or methacrylic esters of diols, triols or polyols, in particular ethyleneglycol diacrylate or dimethacrylate.

This is added to the solution in a quantity of between 0.1 and 2 wt% on the total of a).

A further additive of the first adhesive component is the free radical generator.

Free radical generators are known in the literature and described in "Free Radicals in Solution", C, Walling, J. Wiley & Sons, New York, 1957 and in "The Chemistry of Organic Film Formers", D.H. Solomon, J. Wiley & Sons, New York. 1967 page 135.

Preferred radical generators are organic peroxides and hydroperoxides such as cumene hydroperoxide, benzoyl peroxide, lauroyl peroxide, methyl ethyl ketone hydroperoxide, cyclohexanone peroxide etc., used in a quantity of between 0.1 and 2 wt% on the total of a).

The final agent of the mixture a) is the carbon microfibre-based reinforcing additive, used in a quantity of between 1 and 6 phr per 100 g of adhesive paste.

The adhesive component (a) obtained in this manner has a Brookfield viscosity of between 10,000 and 70,000 cPa.sec.

The second component, which activates the adhesive component, comprises an activator chosen from a mixture of aldehyde-amine condensation products in which an activation promoter consisting of an organic salt of a metal of the first transition series of low oxidation state is dissolved.

Various aldehydes and primary amines are suitable for preparing the adhesive activation component.

The aldehydes are preferably aliphatic and contain radicals with from 1 to 12 carbon atoms.

Examples of aldehydes which can be used for preparing the adhesive activation component according to the present invention are acetaldehyde. butyraldehyde, propionaldehyde, cyclopentanal, hexanal, cyclohexanal, hydrocinnamaldehyde, heptanal, decanal, dodecanal etc.

Any aliphatic or aromatic primary amine with up to 18 carbon atoms can be used for preparing the activators of the present invention.

Examples of such amines are ethylamine, butylamine, pentylamine, cyclopentylamine, hexylamine, cyclohexylamine, octylamine, decylamine, dodecylamine, hexadecylamine, octadecylamine, aniline, tolyl amine, xylyl amine etc.

Preferred substances for preparing the adhesive activating component are butyraldehyde-aniline condensation products available commercially under the name of VAMAC 808 from the Du Pont Company.

The activation promoter agent is an organic salt of a metal of the first transition series of low oxidation state soluble in aldehyde-amine condensation products. It is generally used in a concentration not exceeding 0.5 wt% on the total of component b).

Any metal of the first transition series can be used for preparing the activation promoter, although cobalt, nickel, copper, manganese, iron and vanadium are preferred.

Examples of organic salts which can be used as activation promoters are copper saccharinate, copper paratoluenesulphinate, cobalt acetyl acetonate, iron lactate, iron gluconate etc.

Copper (I) saccharinate is the preferred activation promoter.

The structural adhesives of the present invention are characterised by:
- a setting time, measured as the time after which it is not possible to separate two test pieces by shear force, of less than 90 seconds;
- shear strength, measured in accordance with ASTM D 1002-72, of between 20 and 28 N/mm²:
- peel strength, measured in accordance with ASTM D 1002-72, of between 4 and 7 kg/cm.

Said adhesives are applied by the primer method, by which the adhesive component is applied to one part and the activating component is applied to the other part to be joined together.

With a heat stabilizer present they can be used not only at ambient temperature but also at higher temperature, both during setting and during final use.

The adhesives of the present invention can be used on porous or smooth surfaces without it being necessary to pre-treat the surfaces to which they are applied.

Materials which can be bonded by the composition of the present invention include steel, aluminium, copper, brass, polar polymer materials, wood, glass, paper, pre-painted surfaces etc.

Some non-limiting illustrative examples are given hereinafter for the purpose of clarifying the present invention and for demonstrating its implementation.

### EXAMPLE 1 (comparative)

40 g of ethylmethacrylate (EMA) are added to a mixture consisting of 35 g of chlorosulphonated polyethylene (known commercially as Hypalon 20), 23.3 g of methacrylic acid (MA) and 1 g of ethyleneglycol-dimethylacrylate (EGDMA).

The mass is mixed at ambient temperature until the entire polymer has completely dissolved (time required: about 24 hours).

The adhesive paste obtained is completed by adding 0.3 g of di-tert-butyl-para-cresol (BHT) and 0.4 g of a free radical generator in the form of cumene hydroperoxide (CHP).

The Brookfield viscosity of the paste is 60,000 mPa.sec.

Steel test pieces of dimensions 120 x 25 x 1.5 mm are prepared and treated with abrasive paper No. 120.

A film of about 0.5 mm thickness of paste is spread on one test piece, and the activator consisting of the product of the condensation reaction between butyraldehyde and aniline containing 0.01 wt% of copper (I) introduced as copper saccharinate is spread on another test piece.

The two test pieces are pressed together under a pressure of about 2 N/m².

The adhesive is post-crosslinked at 100°C for one hour from the pressing together of the test pieces.

The following results are obtained:
- setting time: 30 seconds;
- shear strength: 20 N/mm²;
- peel strength: 4 kg/cm.

### EXAMPLE 2

The test described in Example 1 is repeated, adding to the original formulation 1 g of carbon fibre of diameter D = 7 micrometres and length L = 100 micrometres.

This quantity corresponds to 1 phr calculated on 100 g of adhesive paste.

The following results are obtained:
- setting time: 30 seconds;
- shear strength: 21.1 N/mm²;
- peel strength: 4.3 kg/cm.

### EXAMPLE 3

The test described in Example 1 is repeated, adding to the original formulation 2 g of carbon fibre of diameter D = 7 micrometres and length L = 100 micrometres.

This quantity corresponds to 2 phr calculated on 100 g of adhesive paste.

The following results are obtained:
- setting time: 30 seconds;
- shear strength: 23.3 N/mm²;
- peel strength: 4.5 kg/cm.

### EXAMPLES 4-6

The test described in Example 1 is repeated, adding to the original formulation respectively 3, 4.5 and 5 g of carbon fibre of diameter D = 7 micrometres and length L = 100 micrometres.

This quantity corresponds respectively to 3, 4.5 and 5 phr calculated on 100 g of adhesive paste.

The results obtained are given in Table 1.

### EXAMPLE 7 (comparative)

34.5 g of ethylmethacrylate (EMA) are added to a mixture consisting of 30 g of chlorosulphonated polyethylene (known commercially as Hypalon 20), 33.8 g of methacrylic acid and 1.0 g of ethyleneglycol-dimethylacrylate (EGDMA).

The mass is mixed at ambient temperature until the entire polymer has completely dissolved (time required: about 24 hours).

The adhesive paste obtained is completed by adding 0.3 g of di-tert-butyl-para-cresol (BHT) and 0.4 g of a free radical generator of usual type (initiator) in the form of cumene hydroperoxide (CHP).

The Brookfield viscosity of the paste is 34.000 mPa.sec.

Steel test pieces of dimensions 120 x 25 x 1.5 mm are prepared and treated with abrasive paper No. 120.

A film of about 0.5 mm thickness of paste is spread on one test piece, and the activator consisting of the product of condensation of butyraldehyde and aniline containing 0.1 wt% of copper (I) introduced as copper saccharinate is spread on another test piece.

The two test pieces are pressed together under a pressure of about 2 N/m².

The adhesive is post-crosslinked at 100°C for one hour from the pressing together of the test pieces.

The following results are obtained:
- setting time: 30 seconds;
- shear strength: 21 N/mm²;
- peel strength: 4.2 kg/cm.

### EXAMPLE 8

The test described in Example 7 is repeated, adding to the original formulation 1 g of carbon fibre of diameter D = 7 micrometres and length L = 100 micrometres.

This quantity corresponds to 1 phr calculated on 100 g of adhesive paste.

The following results are obtained:
- setting time: 30 seconds;
- shear strength: 22.8 N/mm²;
- peel strength: 4.4 kg/cm.

### EXAMPLE 9

The test described in Example 7 is repeated, adding to the original formulation 2 g of carbon fibre of diameter D = 7 micrometres and length L = 100 micrometres.

This quantity corresponds to 2 phr calculated on 100 g of adhesive paste.

The following results are obtained:
- setting time: 30 seconds;
- shear strength: 24.7 N/mm²;
- peel strength: 5 kg/cm.

### EXAMPLE 10

The test described in Example 7 is repeated, adding to the original formulation 3 g of carbon fibre of diameter D = 7 micrometres and length L = 100 micrometres.

This quantity corresponds to 3 phr calculated on 100 g of adhesive paste.

The results obtained are given in Table 2.

**TABLE 1**

| Acrylic adhesive with 35 wt% of Hypalon 20 rubber, and added carbon microfibres | | | |
|---|---|---|---|
| Example | Carbon fibre (phr) | Shear strength (N/mm₂) | Peel strength (kg/cm) |
| 1 | - | 20.0 | 4.0 |
| 2 | 1 | 21.1 | 4.3 |
| 3 | 2 | 23.3 | 4.5 |
| 4 | 3 | 26.1 | 5.0 |
| 5 | 4.5 | 27.5 | 6.0 |
| 6 | 5 | 27.7 | 6.1 |

**TABLE 2**

| Acrylic adhesive with 30 wt% of Hypalon 20 rubber, and added carbon microfibres | | | |
|---|---|---|---|
| Example | Carbon fibre (phr) | Shear strength (N/mm₂) | Peel strength (kg/cm) |
| 7 | - | 21.0 | 4.2 |
| 8 | 1 | 22.8 | 4.4 |
| 9 | 2 | 24.7 | 5.0 |
| 10 | 3 | 27.0 | 5.8 |

## Claims

1. Acrylic-based bicomponent structural adhesives comprising:
a) a first adhesive component consisting of a solution of an elastomer in a monofunctional acrylic monomer containing a free radical generator, a solution stabilizer, an adhesion promoter and a cross-linking agent,:
b) a second component activating the first adhesive component and consisting or a mixture or aldehyde-amine condensation products in which an organic salt of a metal of the first transition series of low oxidation state is dissolved, characterised in that component a) further contains a carbon microfibre-based reinforcing additive in a quantity of 1-6 phr per 100 g of adhesive paste.

2. Adhesives as claimed in claim 1, wherein the dimensions of the carbon microfibres of the reinforcing additive carbon microfibres according to the invention are of a length L between 100 and 1000 micrometres and a diameter D of between 5 and 8 micrometres, so that L/D is between 12.5 and 200.

3. Adhesives as claimed in any one of the preceding claims, wherein the elastomer is chosen from chlorosulphonated polyolefins.

4. Adhesives as claimed in any one of the preceding claims, wherein the chlorosulphonated polymer is added to the acrylic monomer in a quantity of between 25 and 40 wt% on the total component a).

5. Adhesives as claimed in any one of the preceding claims, wherein the stabilizer for solution a) is chosen from quinones and hydroquinones and is added in a quantity of between 0.1 and 2 wt% on the total component a).

6. Adhesives as claimed in any one of the preceding claims, wherein the adhesion promoter is chosen from unsaturated mono and dicarboxylic acids and is added in a quantity of up to 35 wt% on the total component a).

7. Adhesives as claimed in any one of the preceding claims, wherein the free radical generator is chosen from organic peroxides and hydroperoxides and is added in a quantity of between 0.1 and 2 wt% on the total component a).

8. Adhesives as claimed in any one of the preceding claims, wherein the cross-linking agent is chosen from acrylic or methacrylic esters of diols, triols or polyols, and is added in a quantity of between 0.1 and 2 wt% on the total of a).

9. Adhesives as claimed in any one of the preceding claims, wherein the mixture of aldehyde-amine condensation products consists of the butyraldehyde-aniline condensation product.

10. Adhesives as claimed in any one of the preceding claims, wherein the activation promoter is an organic salt of a metal of the first transition series and is used in a concentration not exceeding 0.5 wt% on the total component b).

11. Structural adhesives as claimed in any one of the preceding claims, having:
- a setting time, measured as the time after which it is not possible to separate two test pieces by shear force, of less than 90 seconds;
- a shear strength, measured in accordance with ASTM D 1002-72, of between 20 and 28 N/mm²;
- a peel strength of between 4 and 7 kg/cm.

12. The use of adhesives claimed in any one of the preceding claims for bonding steel, aluminium, copper, brass, polar polymer materials, wood, glass, paper or pre-painted surfaces

## Patentansprüche

1. Zweikomponenten-Konstruktionsklebstoff auf Acrylbasis, umfassend:
a) eine erste Klebstoffkomponente, welche aus einer Lösung eines Elastomers in einem monofunktionalen Acrylmonomer besteht, welche einen Bildner von freien Radikalen, ein Lösungsstabilisierungsmittel, einen Klebemittelverstärker und ein Vernetzungsmittel enthält;
b) eine zweite, die erste Komponente aktivierende Komponente, welche aus einer Mischung eines Aldehyd-Amin-Kondensationsprodukts besteht, in welcher ein organisches Salz eines Metalls der ersten Übergangsreihe in einer niedrigen Oxidationsstufe gelöst ist,
dadurch gekennzeichnet, daß die Komponente a) ferner ein verstärkendes Additiv auf Kohlemikrofaser-Basis in einer Menge von 1 bis 6 phr per 100 g Klebstoffpaste enthält.

2. Klebstoff nach Anspruch 1, worin die Abmessungen der Kohlemikrofasern der Kohlemikrofasern des verstärkenden Additivs erfindungsgemäß eine Länge L zwischen 100 und 1000 µm und einen Durchmesser D zwischen 5 und 8 µm aufweisen, so daß L/D zwischen 12,5 und 200 liegt.

3. Klebstoff nach einem der voranstehenden Ansprüche, worin das Elastomer ausgewählt ist aus chlorsulfonierten Polyolefinen.

4. Klebstoff nach einem der voranstehenden Ansprüche, worin das chlorsulfonierte Polymer zu dem Acrylmonomer in einer Menge zwischen 25 und 40 Gew% der gesamten Komponente a) zugefügt wird.

5. Klebstoff nach einem der voranstehenden Ansprüche, worin das Stabilisierungsmittel für die Lösung a) ausgewählt ist von Chinonen und Hydrochinonen und in einer Menge zwischen 0,1 und 2 Gew% bezogen auf die Gesamtkomponente a) zugefügt ist.

6. Klebstoff nach einem der voranstehenden Ansprüche, worin der Klebemittelverstärker ausgewählt ist aus ungesättigten Mono- und Dicarbonsäuren und in einer Menge von bis zu 35 Gew% bezogen auf die Gesamtkomponente a) zugefügt ist.

7. Klebstoff nach einem der voranstehenden Ansprüche, worin der Bildner freier Radilkale ausgewählt ist aus organischen Peroxiden und Hydroperoxiden und in einer Menge zwischen 0,1 und 2 Gew% der Gesamtkomponente a) zugefügt ist.

8. Klebstoff nach einem der voranstehenden Ansprüche, worin das Vernetzungsmittel ausgewählt ist aus Acryl- oder Methacrylestern von Diolen, Triolen oder Polyolen in einer Menge zwischen 0,1 und 2 Gew% des gesamten von a) zugefügt ist.

9. Klebstoff nach einem der voranstehenden Ansprüche, worin die Mischung des Aldehyd-Amin-Kondensationsprodukts aus dem Butyraldehyd-Anilin-Kondensationsprodukt besteht.

10. Klebstoff nach einem der voranstehenden Ansprüche, worin der Aktivierungsverstärker ein organisches Salz eines Metalls der ersten Übergangsreihe ist und in einer Konzentration, die 0,5 Gew% der Gesamtkomponente b) nicht übersteigt, verwendet wird.

11. Konstruktionsklebstoff nach einem der voranstehenden Ansprüche, welcher eine Abbindezeit von weniger als 90 Sekunden aufweist, gemessen als die Zeit, nach der es nicht mehr möglich ist, zwei Probestücke durch Scherkräfte zu trennen;
eine Scherfestigkeit, gemessen gemäß ASTM D 1002-72 zwischen 20 und 28 N/mm²;
eine Ablösefestigkeit zwischen 4 und 7 kg/cm aufweist.

12. Verwendung eines Klebstoffs gemäß einem der voranstehenden Ansprüche zum Kleben von Stahl, Aluminium, Kupfer, Bronze, polaren Polymer-Materialien, Holz, Glas, Papier oder vorgestrichene Oberflächen.

## Revendications

1. Adhésifs structuraux à deux composants, à base de composés acryliques, comprenant :
a) un premier composant adhésif, constitué par une solution d'un élastomère dans un monomère acrylique monofonctionnel, contenant un agent formant des radicaux libres, un agent stabilisant la solution, un promoteur d'adhésion et un agent de réticulation, et
b) un second composant activant le premier composant adhésif et constitué d'un mélange de produits de condensation aldéhyde-amine dans lequel est dissous un sel organique d'un métal de la première série des métaux de transition, qui se trouve à un faible degré d'oxydation,
caractérisé en ce que le composant (a) contient en outre un adjuvant de renforcement à base de micro-fibres de carbone, en une proportion de 1 à 6 parties pour cent parties de résine (pcr), pour 100 g de pâte adhésive.

2. Adhésifs conformes à la revendication 1, dans lesquels les micro-fibres de carbone de l'adjuvant de renforcement de l'invention ont les dimensions suivantes : une longueur L comprise entre 100 et 1000 micromètres et un diamètre compris entre 5 et 8 micromètres, de façon que le rapport L/D vaille entre 12,5 et 200.

3. Adhésifs conformes à l'une des revendications précédentes, dans lesquels l'élastomère est choisi parmi les polyoléfines chlorosulfonées.

4. Adhésifs conformes à l'une des revendications précédentes, dans lesquels le polymère chlorosulfoné est ajouté au monomère acrylique en une quantité représentant entre 25 et 40 % du poids total du composant (a).

5. Adhésifs conformes à l'une des revendications précédentes, dans lesquels l'agent stabilisant la solution qu'est le composant (a) est choisi parmi les quinones et les hydroquinones et ajouté en une quantité représentant entre 0,1 et 2 % du poids total du composant (a).

6. Adhésifs conformes à l'une des revendications précédentes, dans lesquels le promoteur d'adhésion est choisi parmi les acides monocarboxyliques et dicarboxyliques insaturés et ajouté en une quantité représentant jusqu'à 35 % du poids total du composant (a).

7. Adhésifs conformes à l'une des revendications précédentes, dans lesquels l'agent formant des radicaux libres est choisi parmi les peroxydes et hydroperoxydes organiques et ajouté en une quantité représentant entre 0,1 et 2 % du poids total du composant (a)

8. Adhésifs conformes à l'une des revendications précédentes, dans lesquels l'agent de réticulation est choisi parmi les esters acrylates et méthacrylates de diols, triols ou polyols et ajouté en une quantité représentant entre 0,1 et 2 % du poids total du composant (a)

9. Adhésifs conformes à l'une des revendications précédentes, dans lesquels le mélange de produits de condensation aldéhyde-amine est constitué par du produit de condensation de butyraldéhyde et d'aniline.

10. Adhésifs conformes à l'une des revendications précédentes, dans lesquels le promoteur d'activation qu'est le sel organique d'un métal de la première série des métaux de transition est utilisé en une quantité ne représentant pas plus de 0,5 % du poids total du composant (b).

11. Adhésifs structuraux conformes à l'une des revendications précédentes, dont :
- le temps de prise, c'est-à-dire le temps au bout duquel on ne peut plus séparer deux pièces d'essai en y appliquant une force de cisaillement, est inférieur à 90 secondes ;
- la résistance au cisaillement, mesurée selon la norme ASTM D 1002-72, vaut entre 20 et 28 N/mm² ;
- la résistance au pelage vaut entre 4 et 7 kg/cm.

12. Emploi d'adhésifs conformes à l'une des revendications précédentes, pour coller des surfaces d'acier, d'aluminium, de cuivre, de laiton, de matériaux polymères polaires, de bois, de verte ou de papier, ou des surfaces pré-enduites.
